# EUROPEAN PATENT SPECIFICATION

(11) **EP 1 313 011 B1**
(45) Date of publication and mention of the grant of the patent: **12.12.2007**
(21) Application number: 02257462.8
(22) Date of filing: 28.10.2002
(51) Int. Cl.: G06F 9/45

(54) **Intermediate code execution system, intermediate code execution method, and computer program product for executing intermediate code**
System zum Ausführen von Zwischenkode, Methode zum Ausführen von Zwischenkode, und Computerprogrammprodukt zum Ausführen von Zwischenkode
Système pour l'exécution de code intermédiaire, méthode pour l'exécution de code intermédiaire, et produit de programme informatique pour l'exécution de code intermédiaire

(30) Priority: 31.10.2001 JP 2001334822
(43) Date of publication of application: 21.05.2003
(73) Proprietor: Aplix Corporation, Shinjuku-ku, Tokyo (JP)
(72) Inventor: Kobayashi, Tetsuyuki., c/o Aplix Corporation, Tokyo (JP)
(74) Representative: Hitching, Peter Matthew

(56) References cited:
- US-A- 5 889 996
- US-B1- 6 324 686
- US-B1- 6 470 424

## Description

For the purpose of providing a program which does not depend on a platform of a computer such as hardware or an OS, there has been proposed a method of constructing a virtual machine (VM) on each platform by a software technique or a hardware technique and executing an intermediate code between a source code and an object code on the virtual machine. As one of program languages adopting such a method, there is Java (R) adopting a form of the intermediate code called a class file. It is to be noted that the hardware and the virtual machine constructed on the hardware may be collectively referred to as an intermediate code execution system hereinafter.

According to the above-described method, since a single program code can be supplied to various platforms and executed, it is no longer necessary to prepare an object code which can be executed only on each platform. As a result, not only distribution of the program can be simplified, but software development can be made efficient. Therefore, the virtual machine has been constructed in platforms of various computers. Further, in recent years, construction of the virtual machine on a processor has been also started in various electronic devices (which will be referred to as an assembled device hereinafter) having a processor mounted therein.

Here, as the virtual machine, there is known one which is of an interpreter type which is constructed on the platform in the form of software and sequentially interprets and executes byte code commands included in a class file. The interpreter type virtual machine requires a process of taking out byte code commands one by one from the class file and interpreting their contents. This process becomes the overhead in the prior art, and the excellent performance can not be hence obtained.

Thus, there has been proposed a JIT compiler (Just In Time Compiler) system, an AOT compiler (Ahead Of Time Compiler) or the like which compiles the class file into a native code inherent to each hardware and the executes it for the purpose of improving the performance. Furthermore, there has been attempted construction of the virtual machine in the form of hardware like a Java chip which is specially designed to enable direct execution of byte code commands.

In the compiler system such as JIT or AOT mentioned above, since the native code of the processor is executed, it is superior to the interpreter system when taking notice of only a speed of command execution. The compiler system, however, requires a work area necessary for a compile operation itself or an area for storing the native code which is four- to ten-fold of the size of the class file, and hence a larger quantity of memory is disadvantageously required than in the interpreter system. Such a problem is prominent in the assembled device in which restriction in hardware resources is harder than that in a regular computer in particular. Moreover, when starting compile after directing execution of the class file, the compile operation becomes the overhead, and the sufficient performance may not be possibly obtained.

In addition, according to the Java chip mentioned above, although the class file can be executed with the high performance without performing compile, a large amount of development cost is required in development of such a dedicated chip, and increase in cost of the chip itself is inescapable. Additionally, in view of the fact that version upgrade or bug fix is appropriately performed in language specification according to advancement in technology or needs in the market, there is an aspect that constructing the virtual machine in the form of hardware is not necessarily preferable. In particular, in the virtual machine in the assembled device, adoption of the Java chip is not realistic because of combination of strong demands for reduction in cost and version update of the specification in a short cycle.

As described above, since it is hard to apply the virtual machine such as the compiler system or the Java chip in the assembled device or the like, improvement of the performance in execution of the class file has been desired in the virtual machine having the interpreter system which can execute the compact class file as it is mounted in the form of software which can cope with a change in specification without depending on a special hardware design.

It is an object of the present invention to improve the performance of an intermediate code execution system which executes an intermediate code by an interpreter system.

US 5889996 may be considered to disclose a system for executing intermediate code obtained by compiling a source code created in a predetermined program language, the predetermined language having a command set, and the system comprising a processor operable to judge whether a command taken out from the intermediate code belongs to a subset of commands selected from the commands of said command set and, if so, to employ a high-speed memory to interpret and execute the taken-out command and, if not, to employ a storage portion other than said high-speed memory to interpret and execute the taken-out command, the high-speed memory having a higher speed of transfer of data to the processor than the storage portion. This system uses a level-1 cache of the processor as the high-speed memory. An initial application is executed by the system for the purpose of loading into the cache an image (copy) of a code segment, written in the native language of the processor, corresponding individually to each of the virtual machine instructions. Each code-segment image occupies a single cache line in the cache. Once the code-segment images have been loaded into the cache, the cache is "pinned" so that the cache controller is disabled from replacing the contents of any cache line. Then, during subsequent execution of other Java applications, the processor can access the code segments needed to interpret and execute all Java commands whose code-segment images were preloaded into the caches by accessing the cache rather than having to access the main memory. Less than a full set of instructions may be preloaded into the cache.

An intermediate code executing system embodying a first aspect of the present invention is characterised by: a first software interpreter module adapted to be stored, when the system is in use, in said high-speed memory and comprising at least one software program which, when executed by the processor, causes the processor to carry out the judgement whether the taken-out command belongs to said subset and the interpreting and execution of any taken-out command judged by the first software interpreter module to belong to said subset, said first software interpreter module being operable, when carrying out said judgement, to compare an operation code of the taken-out command with respective operation codes of the commands belonging to said subset of commands in descending order of frequency of occurrence of the commands of said subset; and a second software interpreter module adapted to be stored, when the system is in use, in said storage portion and comprising at least one software program which, when executed by the processor, causes the processor to carry out the interpreting and execution of a remaining command of said command set not judged by the first software interpreter module to belong to said subset.

According to a second aspect of the present invention, there is provided a method of executing intermediate code obtained by compiling a source code created in a predetermined program language, the predetermined language having a command set, and the method comprising using a processor to judge whether a command taken out from the intermediate code belongs to a subset of commands selected from the commands of said command set and, if so, employing a high-speed memory to interpret and execute the taken-out command and, if not, employing a storage portion other than said high-speed memory to interpret and execute the taken-out command, the high-speed memory having a higher speed of transfer of data to the processor than the storage portion; characterised by: using a first software interpreter module, stored in said high-speed memory and comprising at least one software program, to cause the processor to carry out the judgement whether the taken-out command belongs to said subset and the interpreting and execution of any taken-out command judged by the first software interpreter module to belong to said subset, said judgement being carried out by comparing an operation code of the taken-out command with respective operation codes of the commands belonging to said subset of commands in descending order of frequency of occurrence of the commands of said subset; and using a second software interpreter module, stored in said storage portion and comprising at least one software program, to cause the processor to carry out the interpreting and execution of a remaining command of said command set not judged by the first software interpreter module to belong to said subset.

According to a third aspect of the present invention, there is provided a computer program, adapted to be executed by a processor to cause the processor to execute intermediate code obtained by compiling a source code created in a predetermined program language, the predetermined language having a command set, the processor having access to a high-speed memory and a storage portion other than said high-speed memory, and the high-speed memory having a higher speed of transfer of data to the processor than the storage portion, and the program comprising: a first software interpreter module which is adapted to be stored in said high-speed memory and which, when executed by the processor, causes the processor to judge whether a command taken out from the intermediate code belongs to a subset of commands selected from the commands of said command set and to interpret and execute any taken-out command judged by the first software interpreter module to belong to said subset, said judgement being carried out by comparing an operation code of the taken-out command with respective operation codes of the commands belonging to said subset of commands in descending order of frequency of occurrence of the commands of said subset; and a second software interpreter module which is adapted to be stored in said storage portion and which, when executed by the processor, causes the processor to interpret and execute a remaining command of said command set not judged by the first software interpreter module to belong to said subset.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a conceptual view showing a hardware configuration applicable to a first embodiment according to the present invention;
FIG. 2 is a function block diagram of an intermediate code execution system applicable to the first embodiment according to the present invention;
FIG. 3 is a flowchart illustrating an operation of the intermediate code execution system applicable to the first embodiment according to the present invention;
FIG. 4 is a function block diagram of an intermediate code execution system applicable to a second embodiment according to the present invention; and
FIG. 5 is a flowchart illustrating an operation of the intermediate code execution system applicable to the second embodiment of the present invention.

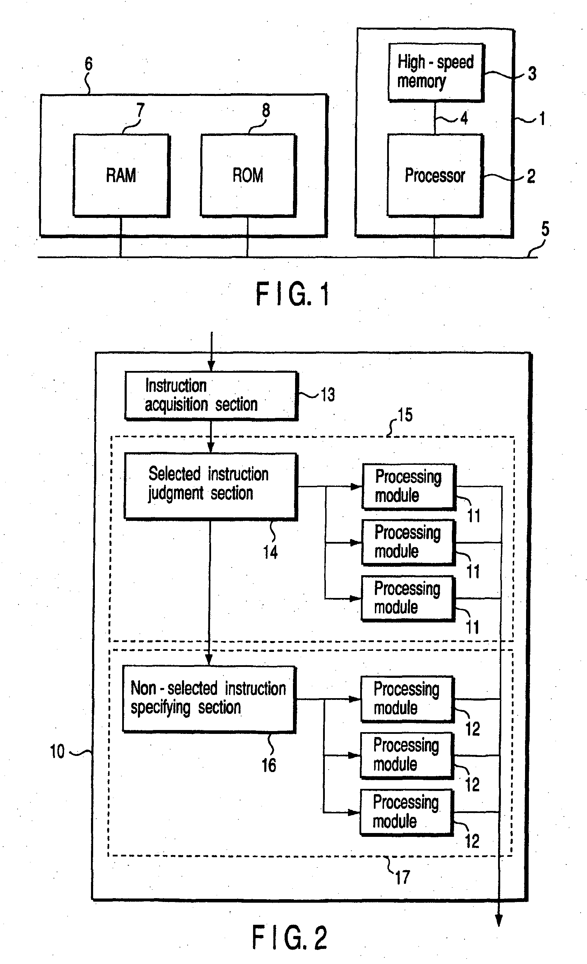

A first embodiment according to the present invention will be first described with reference to FIGS. 1, 2 and 3.

FIG. 1 is a view schematically showing a hardware configuration of an intermediate code execution system 1 according to the first embodiment of the present invention, and FIG. 2 is a function block diagram of the intermediate code execution system 1.

As shown in FIG. 1, the hardware configuration of the intermediate code execution system 1 includes a chip 1 having a processor 2 such as a CPU or an MPU and a high-speed memory 3, and a storage portion 6 having a RAM 7 and a ROM 8. Besides, there may be an input device, a display device, an external interface or the like, but they are not directly related to the structure and effects/advantages of this embodiment and hence omitted.

Here, the processor 2 and the storage portion 6 are connected through an external bus 5, whereas the processor 2 and the high-speed memory 3 are connected through an internal bus 4 having a larger bus width than the external bus 4, and the high-speed memory 3 can transfer data to the processor 2 at a higher speed than that in the storage portion 6. Although an internal memory or a cache memory can be used for such a high-speed memory 3, description will be given as to the case where the internal memory is used in this embodiment.

In the above-described hardware configuration, the intermediate code execution system 1 forming the function block diagram such as shown in FIG. 2 can be realized by executing various kinds of software stored in the storage portion 6 by using the processor 2. The intermediate code execution system 1 executes an intermediate code which does not depend on a platform, and execution of a class file obtained by compiling a source code created in the Java language will be explained in this embodiment. Each function block will now be described.

The intermediate code execution system 1 includes a processing command acquisition portion 13, a first processing command execution portion 15, and a second processing command execution portion 17.

The command acquisition portion 13 sequentially fetches a next command code to be executed from the class file, and the fetched command code is transferred to the first processing command execution portion 15.

The first processing command execution portion 15 includes a selected processing command judgment portion 14 and processing modules 11, and it has a function to sequentially interpret and execute subsets of byte code commands selected from all the byte code commands included in a command system of the Java language. More specifically, in the selected processing command judgment portion 14, a command code taken out by the processing command acquisition portion 13 is compared with each byte code command included in the subset, and the processing module 11 corresponding to the byte code command is executed when they coincide with each other. The processing module 11 is a software program which is provided in accordance with each byte code command included in the subset and causes the processor 2 to execute processing according to a defined content of each byte code command. When there is no same command code in the byte code commands included in the subset, the taken-out command code is transferred to the second processing command execution portion 17.

The second processing command execution portion 17 includes a non-selected processing command specification portion 16 and a processing module 12, and has a function to sequentially interpret and execute byte code commands which are not included in the subset. More specifically, in the non-selected processing command specification portion 16, the taken-out command code is compared with each of the byte code commands which are not included in the subset. Then, when they match with each other, the processing module 12 corresponding to that byte code command is executed. As described above, predetermined processing is executed in the processing module 11 or 12 corresponding to the taken-out command code by combination of the first processing command execution portion 15 and the second processing command execution portion 17.

As described above, in this embodiment, the byte code commands are divided into those executed in the first processing command execution portion 15 and those executed in the second processing command execution portion 17. Here, the byte code commands in the Java (R) language can be roughly divided into four-operation-based commands (iadd, isub, imul, idiv, ...) or bit operation-based commands (ior, iand, ishl, ...) whose fineness is small, memory operation-based command (iload, istore, iaload, ...) whose fineness is medium, and Java-peculiar commands (new, invokespecial, ...) whose fineness is large. Further, there is generally a tendency that a frequency of appearance in the class file is high in commands whose fineness is small and it is low in commands whose fineness is large.

Thus, in this embodiment, commands whose size is small and appearance frequency is high are selected from all the byte code commands in advance, and the selected byte code commands are executed in the first processing command execution portion 15, and the remaining byte code commands are executed in the second processing command execution portion 17. That is, the first processing command execution portion 15 has the processing module 11 corresponding to each of the selected byte code commands. Furthermore, the selected processing command judgment portion 14 compares an operation code of a given command code with operation codes of the selected byte code commands one by one, and executes the corresponding processing module 11 when they coincide with each other. Moreover, the second processing command execution portion 17 has the processing module 12 corresponding to each of the remaining byte codes. In addition, the non-selected processing command specification portion 16 compares the operation code of the given command code with operation codes of the remaining byte code commands one by one, and executes the processing module 12 when they coincide with each other.

However, a byte code command having a high frequency varies depending on the environment in which the intermediate code execution system 10 is mounted. For example, the case where it is mounted in a mobile phone, the case where it is mounted in a car navigation system and the case where it is mounted in a PDA all have different use objects and use situations, and hence a command with a high frequency in a given environment does not necessary have the high frequency in any other system. Therefore, it is preferable to examine appearance frequencies of the byte code commands in accordance with each environment in which the intermediate code execution system 10 is mounted and select byte code commands to be executed in the first processing command execution portion 15 based on an examination result.

In addition, in this embodiment, a code of the software program constituting the first processing command execution portion 15 having the above-described structure (first interpreter module) executes the class file while the code concerned is being stored in the high-speed memory 3. For example, the intermediate code execution system 10 may copy a code of the first processing command execution portion 15 to the high-speed memory 3 from the storage portion 6 before executing the class file. In order to achieve this, the number of the selected byte code commands to be executed in the first processing command execution portion 15 is adjusted, and the software program constituting the first processing command execution portion 15 is formed into a size which can be stored in the high-speed memory 3.

On the other hand, a code of the software program constituting the second processing command execution portion 17 (second interpreter module) can be kept being stored in the storage portion 6.

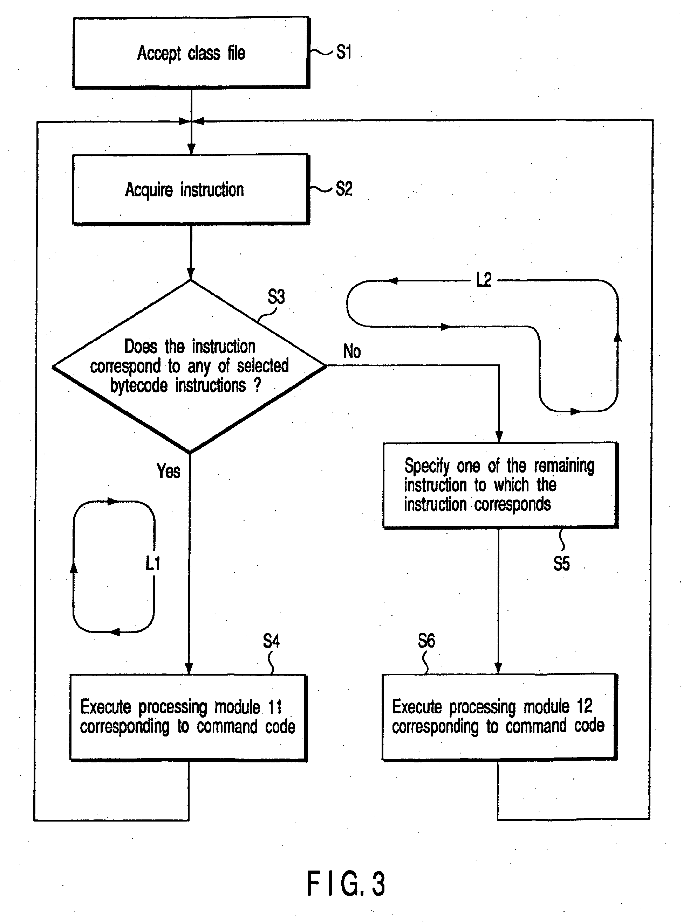

The operation of the intermediate code execution system 10 according to this embodiment will now be described with reference to FIG. 3. Here, the intermediate code execution system 10 has the processing command acquisition portion 13, the first processing command execution portion 15 including the selected processing command judgment portion 14 and the processing module 11, and the second processing command execution portion 17 including the non-selected processing command specification portion 16 and the processing module 12, and they are all constituted by executing a series of software programs stored in the storage portion 6 by the processor 2.

For example, the intermediate code execution system 10 accepts a class file of the Java application from a non-illustrated information input side, and stores the accepted class file in the RAM 7 of the storage portion 6 (S1). Then, the intermediate code execution system 10 executes the software program, and further executes the class file by a series of operations mentioned below. At this moment, the software program constituting the first processing command execution portion 15 (first interpreter module) is kept being stored in the high-speed memory 3 in advance. The following operation is also applied to the intermediate code execution method according to the first embodiment.

The processing command acquisition portion 13 is first constituted by executing the software program by the processor 2, and one command code is taken out from the class file (S2).

Subsequently, the software program constituting the first processing command execution portion 15 (first interpreter module) stored in the high-speed memory 3 is executed, judgment is made upon which one of the selected byte code commands the command code taken out at S2 can be specified to (S3), and the processing module 11 corresponding to the command code is executed if possible (S4). More specifically, the processing executed here is to compare the operation code of the taken-out command code with the operation codes of the selected byte code command one by one in the selected processing command judgment portion 14 in the first processing command execution portion 15 and execute the corresponding processing module 11 when they coincide with each other.

When it is determined to be impossible at S3, namely, it is determined that the operation code of the taken-out command code does not match with any operation codes of the selected byte code commands in the selected-processing command judgment portion 14, the software program constituting the second processing command execution portion 17 (second interpreter module) is executed, one of the remaining byte code commands to which the command code corresponds is specified (S5), and the processing module 12 corresponding to the specified command code is executed (S6). More specifically, the processing executed here is to compare the operation code of the given command code with operation codes of the remaining byte codes one by one in the non-selected processing command specification portion 16 in the second processing command execution portion 17, and the corresponding processing module 12 is executed when they coincide with each other.

Thereafter, the similar procedures are carried out with respect to the next command code included in the class file, and the class file is executed by repeating these procedures.

According to the above-described operation, the byte code commands selected from all the byte code commands are executed by processing forming an inner loup denoted by reference character L1, and the remaining byte code commands are executed by processing forming an outer loop designated by L2.

As described above, in this embodiment, the byte code commands with a small size and a high appearance frequency are first selected from all the byte code command in advance, interpretation and execution of the command codes are carried out in the first processing command execution portion 15 corresponding to the selected byte code commands, and the command codes which has not been executed are then interpreted and executed in the second processing command execution command 17. Therefore, interpretation and execution of the byte code command with the high appearance frequency can be carried out by priority. Additionally, since the software program constituting the first processing command execution portion 15 (first interpreter module) is stored in the high-speed memory 3, the first processing command execution portion 15 can perform interpretation and execution of the byte code command with the high appearance frequency at a high speed. Therefore, according to this embodiment, the byte code commands with the high appearance frequency can be executed at a high speed by priority. On the other hand, since the byte code commands with the low appearance frequency are interpreted and executed by the second processing command execution portion 17, the speed of executing the byte code commands can not be increased. However, the effect of executing the byte code commands with the high appearance frequency by the first processing command execution portion 15 at a high speed by priority is very high, and the performance of the intermediate code execution system 10 can be improved when considering the entire processing executing the class file.

Further, in this embodiment, the software program forming the first processing command execution portion 15 (first interpreter module) may be configured to be optimum for execution of the selected command codes, and the performance of the intermediate code execution system 10 can be further improved by doing so.

For example, both the software program forming the first processing command execution portion 15 (first interpreter module) and the software forming the second processing command execution portion 17 (second interpreter module) may be created by using a high-level language such as C or C++, but the former may be configured to be optimum by using the assembly language.

Furthermore, when the selected processing command judgment portion 14 compares the operation code of the taken-out command code with the operation codes of the selected byte code commands and makes judgment upon whether they coincide with each other, the comparison is performed in the order from the byte code command with the higher frequency. This can preferably be also applied to the non-selected processing command specification portion 16.

In view of the computer program product used to execute the intermediate code, this embodiment is as follows.

That is, there is provided a computer program product which executes an intermediate code obtained by converting a source code created in a predetermined program language on a processor to which the high-speed memory 3 and the storage portion 6 are connected, wherein the first interpreter module corresponding to a subset of a command set of the program language is stored in the high-speed memory 3, the first interpreter module is used to judge whether a command taken out from the intermediate code corresponds to any of the subset, this command is executed when the corresponding command exists in the subset, the second interpreter module corresponding to the remaining commands of the command set is stored in the storage portion 6, and the second interpreter module is used to specify which one of the remaining commands that command corresponds to and execute it when there is no corresponding command in the subset. In this case, it is presumed that the subset of the command set of the program language is previously defined.

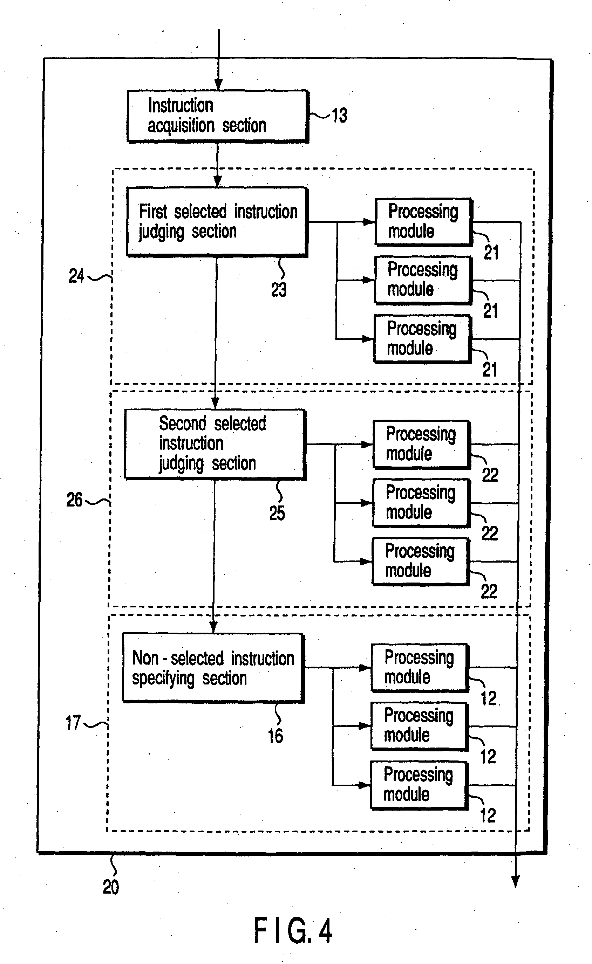

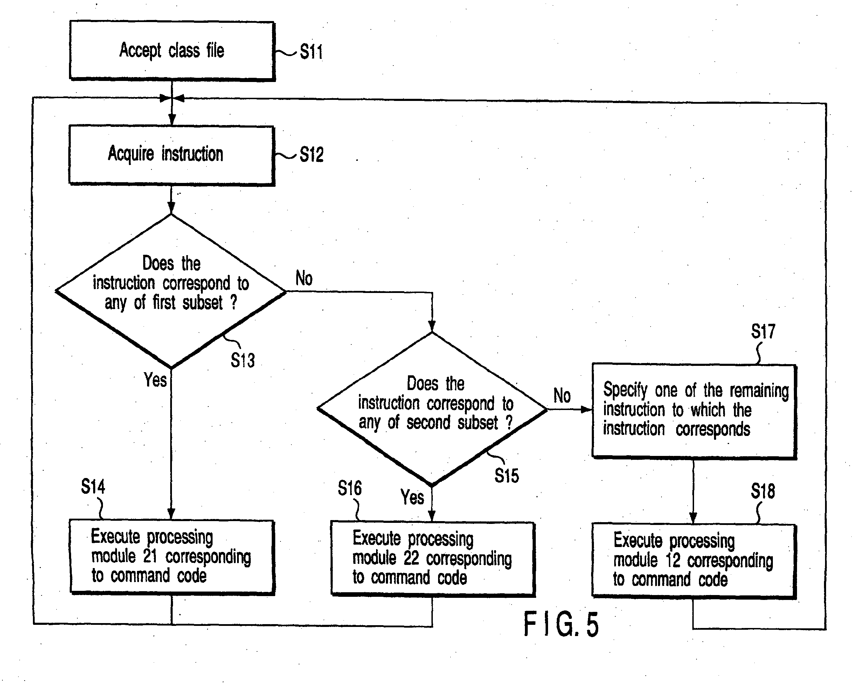

A second embodiment according to the present invention will now be described with reference to FIGS. 4 and 5.

FIG. 4 is a function block diagram of an intermediate code execution system 20 according to the second embodiment of the present invention. In FIG. 4, like reference numerals denote constituent parts equal to those in the first embodiment.

The intermediate code execution system 20 according to the second embodiment is similar to that according to the first embodiment in basic structure, but different from the same in that a first selected processing command execution portion 24 and a second selected processing command execution portion 26 are provided in place of the first processing command execution portion 15 in the first embodiment. Description will be mainly given as to this difference.

The first selected processing command execution portion 24 includes a first selected processing command judgment portion 23 and processing modules 21, and has a function to sequentially interpret and execute a first subset of byte code commands selected from all the byte code commands.

The second selected processing command execution portion 26 includes a second selected processing command judgment portion 25 and processing modules 22, and has a function to sequentially interpret and execute a second subset of byte code commands selected from the remaining byte code commands excluding the first subset.

The processing module 21 is a software program which causes a processor 2 to execute processing according to a defined content of each byte code command belonging to the first subset, and the processing module 22 is a software program which causes the processor 2 to execute processing according to a defined content of each byte code command belonging to the second subset.

Further, concrete functions of the first selected processing command execution portion 24 and the second selected processing command execution portion 26 are substantially similar to that of the processing command execution portion 15 in the first embodiment. When a taken-out command code is the same as any of the byte code commands belonging to the first subset or the second subset, these portions execute that byte code command.

Here, the first subset includes a byte code command having a highest frequency of appearance in a class file, and the second subset includes a byte code command having a second highest frequency of appearance in the class file. Furthermore, in this embodiment, a code of the software program forming the first selected processing command execution portion 24 is stored in a high-speed memory 3. Although it is preferable to store a code of the software program forming the second selected processing command execution portion 26 in the high-speed memory 3 if there is an enough free capacity, it may be stored in a storage portion 6 if the high-speed memory 3 lacks an enough free capacity.

The operation of the intermediate code execution system 20 will now be described with reference to

### FIG. 5.

Like the first embodiment, the intermediate code execution system 10 first accepts the class file of the Java application from a non-illustrated information input side, stores the accepted class file in a RAM 7 of the storage portion 6 (S11), and executes the class file by the following procedures with the software program forming the first selected processing command execution portion 24 being stored in the high-speed memory 3.

One command code is first taken out from the class file like the first embodiment (S12).

Then, the software program forming the first selected processing command execution portion 24 stored in the high-speed memory 3 is executed, judgment is made upon whether the taken-out command code can be specified as any byte code command in the first subset (S13), and the processing module 21 corresponding to that command code is executed when specification is possible (S14).

When it is determined that specification is impossible at S13, the software program forming the second selected processing command execution portion 17 is executed, judgment is made upon whether the command code can be specified as any byte code command in the second subset (S15), and the processing module 22 corresponding to that command code is executed when specification is possible (S16).

Moreover, if it is determined that specification is impossible at S15, the software program forming the second processing command execution portion 17 is executed, one of the remaining byte code commands to which that command code corresponds is specified (S17), and the processing module 12 corresponding to the specified command code is executed (S18).

The similar procedures are carried out with respect to the next command code included in the class file, and the class file is executed by repeating these procedures.

According to this embodiment which executes the class file with the above-described operation, the byte code command with the highest frequency of appearance in the class file can be executed at a high speed by priority like the first embodiment, and the byte code command with the next highest frequency of appearance in the class file can be executed by priority over any other byte code commands.

In addition, in the above-described operation, although the code of the software program forming the first selected processing command execution portion 24 is stored in the high-speed memory 3 in advance, a free capacity in the high-speed memory 3 may be detected when executing the class file, and the code of the software program forming the second selected processing command execution portion 26 may be likewise stored in the high-speed memory 3 if there is an enough free capacity.

Although the above has described the intermediate code execution system according to the first and second embodiments, the present invention is not restricted to these embodiments.

For example, although the internal memory is provided as the high-speed memory 3 in the foregoing embodiments, the present invention is not restricted thereto, and the high-speed memory 3 may be a cache memory. Additionally, the present invention is not restricted to the example of the hardware configuration shown in FIG. 1, and it is possible to apply any hardware configuration as long as a relatively fast memory and a relatively slow memory are both provided in that configuration. The chip 1 may be, for example, an ASIC or a micro controller, and a structure including a plurality of chips 1 or processors 2 can suffice.

When the cache memory is used as the high-speed memory 3 in the first embodiment, execution of the class file may be started with the code of the software program forming the first processing command execution portion 15 being stored in the storage portion 6. In this case, since the code is stored in the cache memory which is the high-speed memory 3 by a predetermined cache mechanism, the performance of the intermediate code execution system 10 can be improved as with the foregoing embodiments. This is also true in the case of using the cache memory in the second embodiment.

Further, although description has been given as to the case where the class file of Java is executed as the intermediate code in each of the foregoing embodiments, the present invention is not restricted thereto.

Furthermore, the software program forming the intermediate code execution system may be previously stored in the storage portion 6, or it may be provided from the outside of the intermediate execution system according to needs. In this case, the conformation of receiving the software program from the outside of the intermediate code execution system is not restricted to download from a server through a network, and the software may be provided from a storage medium such as a CD-ROM or a portable memory.

## Claims

1. A system for executing intermediate code obtained by compiling a source code created in a predetermined program language, the predetermined language having a command set, and the system comprising a processor (2) operable to judge whether a command taken out from the intermediate code belongs to a subset of commands selected from the commands of said command set and, if so, to employ a high-speed memory (3) to interpret and execute the taken-out command and, if not, to employ a storage portion (6) other than said high-speed memory (3) to interpret and execute the taken-out command, the high-speed memory (3) having a higher speed of transfer of data to the processor than the storage portion (6);
**characterised by**:
a first software interpreter module (15; 24) adapted to be stored, when the system is in use, in said high-speed memory (3) and comprising at least one software program which, when executed by the processor, causes the processor to carry out the judgement whether the taken-out command belongs to said subset and the interpreting and execution of any taken-out command judged by the first software interpreter module to belong to said subset, said first software interpreter module (15; 24) being operable, when carrying out said judgement, to compare an operation code of the taken-out command with respective operation codes of the commands belonging to said subset of commands in descending order of frequency of occurrence of the commands of said subset; and
a second software interpreter module (17) adapted to be stored, when the system is in use, in said storage portion (6) and comprising at least one software program which, when executed by the processor, causes the processor to carry out the interpreting and execution of a remaining command of said command set not judged by the first software interpreter module to belong to said subset.

2. The system according to claim 1, **characterised in that** the predetermined program language is Java language.

3. The system according to claim 1or 2, **characterised in that** the intermediate code is a class file including Java byte code commands.

4. The system according to claim 1, 2 or 3, **characterised in that** the command is a Java byte code command.

5. The system according to any preceding claim, **characterised in that** the subset of the command set of the program language is made up of selected processing commands included in the intermediate code with a predetermined frequency or a higher frequency, and said subset is selected in advance based on predetermined conditions concerning an execution environment in which the system is mounted.

6. A method of executing intermediate code obtained by compiling a source code created in a predetermined program language, the predetermined language having a command set, and the method comprising using a processor (2) to judge whether a command taken out from the intermediate code belongs to a subset of commands selected from the commands of said command set and, if so, employing a high-speed memory (3) to interpret and execute the taken-out command and, if not, employing a storage portion (6) other than said high-speed memory (3) to interpret and execute the taken-out command, the high-speed memory (3) having a higher speed of transfer of data to the processor than the storage portion (6);
**characterised by**:
using a first software interpreter module (15; 24), stored in said high-speed memory (3) and comprising at least one software program, to cause the processor to carry out the judgement whether the taken-out command belongs to said subset and the interpreting and execution of any taken-out command judged by the first software interpreter module to belong to said subset, said judgement being carried out by comparing an operation code of the taken-out command with respective operation codes of the commands belonging to said subset of commands in descending order of frequency of occurrence of the commands of said subset; and
using a second software interpreter module (17), stored in said storage portion (6) and comprising at least one software program, to cause the processor to carry out the interpreting and execution of a remaining command of said command set not judged by the first software interpreter module to belong to said subset.

7. The method according to claim 6, **characterised in that** the predetermined program language is Java language.

8. The method according to claim 6 or 7, **characterised in that** the intermediate code is a class file including Java byte codes.

9. The method according to claim 6, 7 or 8, **characterised in that** the command is a Java byte code command.

10. The method according to any one of claims 6 to 9, **characterised in that** the subset of the command set of the program language is made up of selected processing commands included in the intermediate code with a predetermined frequency or a higher frequency, and said subset is selected in advance based on predetermined conditions concerning an execution environment.

11. A computer program, adapted to be executed by a processor to cause the processor to execute intermediate code obtained by compiling a source code created in a predetermined program language, the predetermined language having a command set, the processor having access to a high-speed memory (3) and a storage portion (6) other than said high-speed memory, and the high-speed memory (3) having a higher speed of transfer of data to the processor than the storage portion (6), and the program comprising:
a first software interpreter module (15; 24) which is adapted to be stored in said high-speed memory (3) and which, when executed by the processor, causes the processor to judge whether a command taken out from the intermediate code belongs to a subset of commands selected from the commands of said command set and to interpret and execute any taken-out command judged by the first software interpreter module to belong to said subset, said judgement being carried out by comparing an operation code of the taken-out command with respective operation codes of the commands belonging to said subset of commands in descending order of frequency, of occurrence of the commands of said subset; and
a second software interpreter module (17) which is adapted to be stored in said storage portion (6) and which, when executed by the processor, causes the processor to interpret and execute a remaining command of said command set not judged by the first software interpreter module to belong to said subset.

12. The computer program according to claim 11, **characterised in that** the subset of the command set of the program language is made up of selected processing commands included in the intermediate code with a predetermined frequency or a higher frequency, and said subset is selected in advance on predetermined conditions concerning an execution environment.

## Patentansprüche

1. System zum Ausführen eines Zwischencodes, der durch Kompilieren eines Quellcodes erlangt wird, der in einer vorbestimmten Programmsprache erzeugt ist, wobei die vorbestimmte Sprache einen Befehlssatz aufweist, und das System einen Prozessor (2) umfasst, der betrieben werden kann, um zu beurteilen, ob ein Befehl, der aus dem Zwischencode entnommen ist, in eine Untergruppe von Befehlen gehört, die aus den Befehlen dieser Befehlsgruppe ausgewählt sind, und, wenn dies der Fall ist, einen Hochgeschwindigkeitsspeicher (3) verwendet, um den entnommenen Befehl zu interpretieren und auszuführen, und, wenn dies nicht der Fall ist, einen anderen Speicherabschnitt (6), der sich von dem Hochgeschwindigkeitsspeicher (3) unterscheidet, dazu verwendet, den entnommenen Befehl zu interpretieren und auszuführen, wobei der Hochgeschwindigkeitsspeicher (3) eine höhere Datenübertragungsgeschwindigkeit zu dem Prozessor aufweist, als der Speicherabschnitt (6);
**gekennzeichnet durch**:
ein erstes Software-Interpretationsmodul (15; 24), das dazu angepasst ist, in dem Hochgeschwindigkeitsspeicher (3) gespeichert zu sein, wenn sich das System in Gebrauch befindet, und zumindest ein Software-Programm umfasst, welches, wenn von dem Prozessor ausgeführt, den Prozessor dazu veranlasst, die Beurteilung zu treffen, ob der entnommene Befehl zu dieser Untergruppe gehört, und die Interpretation und Ausführung eines jeden entnommenen Befehls durchzuführen, über den **durch** das erste Software-Interpretationsmodul geurteilt wurde, dass er zu dieser Untergruppe gehört, wobei das erste Software-Interpretationsmodul (15; 24) dazu betrieben werden kann, wenn es diese Beurteilung ausführt, einen Betriebscode des entnommenen Befehls mit betreffenden Betriebscodes derjenigen Befehle, die zu dieser Untergruppe von Befehlen gehören, in der Reihenfolge der absinkenden Auftrittshäufigkeit der Befehle dieser Untergruppe zu vergleichen; und
ein zweites Software-Interpretationsmodul (17), das dazu angepasst ist, in dem Speicherabschnitt (6) gespeichert zu sein, wenn sich das System in Gebrauch befindet, und zumindest ein Software-Programm umfasst, welches, wenn von dem Prozessor ausgeführt, den Prozessor veranlasst, die Interpretation und die Ausführung eines verbleibenden Befehls dieser Gruppe von Befehlen durchzuführen, von dem von dem ersten Software-Interpretationsmodul nicht geurteilt wurde, dass er zu dieser Untergruppe gehört.

2. System nach Anspruch 1, **dadurch gekennzeichnet, dass** die vorbestimmte Programmsprache Java-Sprache ist.

3. System nach Anspruch 1 oder 2, **dadurch gekennzeichnet, dass** der Zwischencode ein Class-File ist, das Java-Byte-Code-Befehle enthält.

4. System nach Anspruch 1, 2 oder 3, **dadurch gekennzeichnet, dass** der Befehl ein Java-Byte-Code-Befehl ist.

5. System nach einem der vorgehenden Ansprüche, **dadurch gekennzeichnet, dass** die Untergruppe der Befehlsgruppe der Programmsprache aus ausgewählten Verarbeitungsbefehlen aufgebaut ist, die in dem Zwischencode mit einer vorbestimmten Häufigkeit oder einer grösseren Häufigkeit enthalten sind, und diese Untergruppe im voraus, gestützt auf vorbestimmte Bedingungen, betreffend eine Ausführungsumgebung, in der das System angebracht ist, ausgewählt wird.

6. Verfahren zum Ausführen von Zwischencode, der durch Kompilieren eines Quellcodes, der in einer vorbestimmten Programmsprache erzeugt ist, erlangt wurde, wobei die vorbestimmte Programmsprache eine Befehlsgruppe aufweist und das Verfahren die Verwendung eines Prozessors (2) umfasst, um zu beurteilen, ob ein Befehl, der aus dem Zwischencode entnommen ist, zu einer Untergruppe von Befehlen gehört, die aus den Befehlen der Befehlsgruppe ausgewählt wurde, wobei, wenn dies der Fall ist, ein Verwenden eines Hochgeschwindigkeitsspeichers (3), um den entnommen Befehl zu interpretieren und auszuführen, und, falls nicht, ein Verwenden eines Speicherabschnitts (6), der sich von diesem Hochgeschwindigkeitsspeicher (3) unterscheidet, um den entnommenen Befehl zu interpretieren und auszuführen, vorgesehen ist, wobei der Hochgeschwindigkeitsspeicher (3) eine höhere Übertragungsgeschwindigkeit von Daten an den Prozessor aufweist als der Speicherabschnitt (6), **gekennzeichnet durch**:
Verwenden eines ersten Software-Interpretationsmoduls (15; 24), das in diesem Hochgeschwindigkeitsspeicher (3) gespeichert ist, und zumindest ein Software-Programm umfasst, um den Prozessor dazu zu veranlassen, die Beurteilung durchzuführen, ob der entnommene Befehl zu der Untergruppe gehört, und das Interpretieren und Ausführen eines jeden entnommenen Befehls, über den **durch** das erste Software-Interpretationsmodul geurteilt wurde, dass er zu der Untergruppe gehört, wobei die Beurteilung **dadurch** ausgeführt wird, dass ein Betriebscode des entnommenen Befehls mit betreffenden Betriebscodes derjenigen Befehle, die zu dieser Untergruppe von Befehlen gehören, in der Reihenfolge der absinkenden Auftrittshäufigkeit der Befehle dieser Untergruppe verglichen wird; und
Verwenden eines zweiten Software-Interpretationsmoduls (17), das in dem Speicherabschnitt (6) gespeichert ist und zumindest ein Software-Programm umfasst, um den Prozessor dazu zu veranlassen, die Interpretation und Ausführung eines verbleibenden Befehls dieser Befehlsgruppe durchzuführen, von dem **durch** das erste Softwarelnterpretationsmodul nicht geurteilt wurde, dass er zu der Untergruppe gehört.

7. Verfahren nach Anspruch 6, **dadurch gekennzeichnet, dass** die vorbestimmte Programmsprache Java-Sprache ist.

8. Verfahren nach Anspruch 6 oder 7, **dadurch gekennzeichnet, dass** der Zwischencode ein Class-File ist, welches Java-Byte-Codes enthält.

9. Verfahren nach Anspruch 6, 7, oder 8, **dadurch gekennzeichnet, dass** der Befehl ein Java-Byte-Code-Befehl ist.

10. Verfahren nach einem der Ansprüche 6 bis 9, **dadurch gekennzeichnet, dass** die Untergruppe der Befehlsgruppe der Programmsprache aus ausgewählten Verarbeitungsbefehlen aufgebaut ist, die in dem Zwischencode mit einer vorbestimmten Häufigkeit oder einer grösseren Häufigkeit enthalten sind, und diese Untergruppe im voraus ausgewählt wird, gestützt auf vorbestimmte Bedingungen, betreffend eine Ausführungsumgebung.

11. Computer-Programm, dazu angepasst, von einem Prozessor ausgeführt zu werden, um den Prozessor zu veranlassen, einen Zwischencode auszuführen, der durch Kompilieren eines Quellcodes erlangt wurde, der in einer vorbestimmten Programmsprache erzeugt ist, wobei die vorbestimmte Sprache einen Befehlssatz aufweist, der Prozessor Zugriff auf einen Hochgeschwindigkeitsspeicher (3) und auf einen Speicherabschnitt (6) hat, der sich von dem Hochgeschwindigkeitsspeicher unterscheidet, und der Hochgeschwindigkeitsspeicher (3) eine höhere Datenübertragungsgeschwindigkeit zu dem Prozessor aufweist, als der Speicherabschnitt (6), wobei das Programm umfasst:
ein erstes Software-Interpretationsmodul (15; 24), welches dazu angepasst ist, in diesem Hochgeschwindigkeitsspeicher (3) gespeichert zu sein, und welches, wenn durch den Prozessor ausgeführt, den Prozessor veranlasst, zu beurteilen, ob ein Befehl, der aus dem Zwischencode entnommen ist, zu einer Untergruppe von Befehlen gehört, die aus den Befehlen der Befehlsgruppe entnommen ist, und jeden entnommenen Befehl zu interpretieren und auszuführen, über den von dem ersten Software-Interpretationsmodul geurteilt wurde, dass er zu dieser Untergruppe gehört, wobei diese Beuteilung **dadurch** ausgeführt wird, dass ein Betriebscode des entnommenen Befehls mit betreffenden Betriebscodes derjenigen Befehle, die zu dieser Untergruppe von Befehlen gehören, in der Reihenfolge der absinkenden Auftrittshäufigkeit der Befehle dieser Untergruppe verglichen wird; und
ein zweites Software-Interpretationsmodul (17), welches dazu angepasst ist, in dem Speicherabschnitt (6) gespeichert zu sein, und welches, wenn von dem Prozessor ausgeführt, den Prozessor veranlasst, einen verbleibenden Befehl der Befehlsgruppe zu interpretieren und auszuführen, über den von dem ersten Software-Interpretationsmodul nicht geurteilt wurde, dass er zu der Untergruppe gehört.

12. Computer-Programm nach Anspruch 11, **dadurch gekennzeichnet, dass** die Untergruppe der Befehlsgruppe der Programmsprache aus ausgewählten Verarbeitungsbefehlen aufgebaut ist, die in dem Zwischencode mit einer vorbestimmten Häufigkeit oder einer grösseren Häufigkeit enthalten sind, und diese Untergruppe vorab gemäss vorbestimmten Bedingungen in Bezug auf die Ausführungsumgebung ausgewählt ist.

## Revendications

1. Système pour exécuter un code intermédiaire obtenu en compilant un code source créé dans un langage de programme prédéterminé, le langage prédéterminé comportant un ensemble de commandes et le système comprenant un processeur (2) pouvant fonctionner pour juger si une commande extraite du code intermédiaire appartient à un sous-ensemble de commandes choisies parmi des commandes dudit ensemble commandes et, si c'est le cas, pour employer une mémoire à grande vitesse (3) afin d'interpréter et d'exécuter la commande extraite et, sinon, pour employer une portion de stockage (6) différente de ladite mémoire à grande vitesse (3) afin d'interpréter et d'exécuter la commande extraite, la mémoire à grande vitesse (3) ayant une vitesse de transfert de données vers le processeur supérieure à la portion de stockage (6) ;
**caractérisé par**:
un premier module interpréteur de logiciel (15; 24) adapté pour être stocké, lorsque le système est en utilisation, dans ladite mémoire à grande vitesse (3) et comprenant au moins un programme logiciel qui, lorsqu'il est exécuté par le processeur, amène le processeur à réaliser le jugement selon lequel la commande extraite appartient ou non audit sous-ensemble et l'interprétation et l'exécution de toute commande extraite jugée par le premier module interpréteur de logiciel comme appartenant audit sous-ensemble, ledit premier module interpréteur de logiciel (15 ; 24) pouvant fonctionner, lors de l'exécution dudit jugement, pour comparer un code d'opération de la commande extraite avec des codes d'opération respectifs des commandes appartenant audit sous-ensemble de commandes dans l'ordre décroissant de fréquence d'occurrence des commandes dudit sous-ensemble ; et
un second module interpréteur de logiciel (17) adapté pour être stocké, lorsque le système est en utilisation, dans ladite portion de stockage (6) et comprenant au moins un programme logiciel qui, lorsqu'il est exécuté par le processeur, amène le processeur à effectuer l'interprétation et l'exécution d'une commande restante dudit ensemble de commandes non jugé par le premier module interpréteur de logiciel comme appartenant audit sous-ensemble.

2. Système selon la revendication 1, **caractérisé en ce que** le langage de programme prédéterminé est le langage Java.

3. Système selon la revendication 1 ou 2, **caractérisé en ce que** le code intermédiaire est un fichier de catégorie comprenant des commandes en pseudo-code binaire Java.

4. Système selon la revendication 1, 2 ou 3, **caractérisé en ce que** commande est une commande en pseudo-code binaire Java.

5. Système selon l'une quelconque des revendications précédentes, **caractérisé en ce que** le sous-ensemble de l'ensemble de commandes du langage de programme est constitué de commandes de traitement sélectionnées inclues dans le code intermédiaire avec une fréquence prédéterminée ou une fréquence supérieure, et ledit sous-ensemble est sélectionné à l'avance sur la base de conditions prédéterminées concernant un environnement d'exécution dans lequel le système est monté.

6. Procédé d'exécution d'un code intermédiaire obtenu en compilant un code source créé dans un langage de programme prédéterminé, le langage prédéterminé comportant un ensemble de commandes et le procédé comprenant l'utilisation d'un processeur (2) pour juger si une commande extraite du code intermédiaire appartient à un sous-ensemble de commandes choisies parmi les commandes dudit ensemble de commandes et, si c'est le cas, employant une mémoire à grande vitesse (3) pour interpréter et exécuter l'ordre extrait et, si ce n'est pas le cas, employant une portion de stockage (6) différente de ladite mémoire à grande vitesse (3) pour interpréter et exécuter l'ordre extrait, la mémoire à grande vitesse (3) ayant une vitesse de transfert de données vers le processeur supérieure à la portion de stockage (6) ;
**caractérisé par** :
l'utilisation d'un premier module interpréteur de logiciel (15; 24), stocké dans ladite mémoire à grande vitesse (3) et comprenant au moins un programme logiciel, pour amener le processeur à réaliser le jugement selon lequel la commande extraite appartient ou non audit sous-ensemble et l'interprétation et l'exécution de tout ordre extrait jugé par le premier module interpréteur de logiciel comme appartenant audit sous-ensemble, ledit jugement étant exécuté en comparant un code d'opération de la commande extraite avec des codes d'opération respectifs des commandes appartenant audit sous-ensemble des commandes dans l'ordre décroissant de fréquence d'occurrence des commandes dudit sous-ensemble ; et
l'utilisation d'un second module interpréteur de logiciel (17), stocké dans ladite portion de stockage (6) et comprenant au moins un programme logiciel, pour amener le processeur à effectuer l'interprétation et l'exécution d'une commande restante dudit ensemble de commandes non jugé par le premier module d'interpréteur de logiciel comme appartenant audit sous-ensemble.

7. Procédé selon la revendication 6, **caractérisé en ce que** le langage de programme prédéterminé est le langage Java.

8. Procédé selon la revendication 6 ou 7, **caractérisé en ce que** le code intermédiaire est un fichier de catégorie comprenant des pseudo-codes binaires Java.

9. Procédé selon la revendication 6, 7 ou 8, **caractérisé en ce que** la commande est une commande en pseudo-code binaire Java.

10. Procédé selon l'une quelconque des revendications 6 à 9, **caractérisé en ce que** le sous-ensemble de l'ensemble de commandes du langage de programme est constitué de commandes de traitement sélectionnées inclues dans le code intermédiaire avec une fréquence prédéterminée ou une fréquence supérieure, et ledit sous-ensemble est sélectionné à l'avance sur la base de conditions prédéterminées concernant un environnement d'exécution.

11. Programme d'ordinateur, adapté pour être exécuté par un processeur pour amener le processeur à exécuter un code intermédiaire obtenu en compilant un code source créé dans un langage de programme prédéterminé, le langage prédéterminé comportant un ensemble de commandes, le processeur ayant accès à une mémoire à grande vitesse (3) et à une portion de stockage (6) différente de ladite mémoire à grande vitesse, et la mémoire à grande vitesse (3) ayant une vitesse de transfert de données vers le processeur supérieure à la portion de stockage (6), et le programme comprenant :
un premier module interpréteur de logiciel (15 ; 24) adapté pour être stocké dans ladite mémoire à grande vitesse (3) et qui, lorsqu'il est exécuté par le processeur, amène le processeur à juger si une commande extraite du code intermédiaire appartient ou non à un sous-ensemble de commandes choisi parmi les commandes dudit ensemble d'ordres et à interpréter et exécuter toute commande extraite jugée par le premier module interpréteur de logiciel comme appartenant audit sous-ensemble, ledit jugement étant réalisé en comparant un code d'opération de la commande extraite avec des codes d'opération respectifs des commandes appartenant audit sous-ensemble de commandes en ordre décroissant de fréquence d'occurrence des commandes dudit sous-ensemble ; et
un second module interpréteur de logiciel (17) adapté pour être stocké dans ladite portion de stockage (6) et qui, lorsqu'il est exécuté par le processeur, amène le processeur à interpréter et exécuter une commande restante dudit ensemble de commande non jugé par le premier module interpréteur de logiciel comme appartenant audit sous-ensemble.

12. Programme d'ordinateur selon la revendication 11, **caractérisé en ce que** le sous-ensemble de l'ensemble de commandes du langage de programme est constitué de commandes de traitement sélectionnées inclues dans le code intermédiaire avec une fréquence prédéterminée ou une fréquence supérieure, et ledit sous-ensemble est sélectionné à l'avance sur des conditions prédéterminées concernant un environnement d'exécution.
